(19) Europäisches Patentamt / European Patent Office / Office européen des brevets

(11) **EP 4 273 952 B1**

(12) **EUROPEAN PATENT SPECIFICATION**

(45) Date of publication and mention
of the grant of the patent:
**15.04.2026  Bulletin 2026/16**

(21) Application number: **22828730.6**

(22) Date of filing: **21.06.2022**

(51) International Patent Classification (IPC):
$H01M\ 4/13$ (2010.01)       $H01M\ 4/139$ (2010.01)
$H01M\ 4/04$ (2006.01)       $H01G\ 11/28$ (2013.01)
$H01G\ 11/86$ (2013.01)      $H01M\ 10/0525$ (2010.01)
$H01M\ 10/0585$ (2010.01)    $H01G\ 11/26$ (2013.01)
$H01M\ 4/02$ (2006.01)

(52) Cooperative Patent Classification (CPC):
**H01G 11/28; H01G 11/86; H01M 4/0404;
H01M 4/13; H01M 4/139; H01M 10/0525;
H01M 10/0585;** H01G 11/26; H01M 2004/021;
H01M 2004/027; Y02E 60/10

(86) International application number:
**PCT/KR2022/008815**

(87) International publication number:
**WO 2022/270883 (29.12.2022 Gazette 2022/52)**

(54) **ELECTRODE FOR ELECTROCHEMICAL DEVICE**

ELEKTRODE FÜR ELEKTROCHEMISCHE VORRICHTUNG

ÉLECTRODE POUR DISPOSITIF ÉLECTROCHIMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2021  KR 20210080424**

(43) Date of publication of application:
**08.11.2023  Bulletin 2023/45**

(73) Proprietor: **LG Energy Solution, Ltd.
Seoul 07335 (KR)**

(72) Inventors:
• **LEE, Taek-Soo
Daejeon 34122 (KR)**
• **JEON, Shin-Wook
Daejeon 34122 (KR)**
• **JO, Young-Joon
Daejeon 34122 (KR)**
• **CHOY, Sang-Hoon
Daejeon 34122 (KR)**

(74) Representative: **Plasseraud IP
104 Rue de Richelieu
CS92104
75080 Paris Cedex 02 (FR)**

(56) References cited:
JP-A- 2015 050 055       KR-A- 20130 026 522
KR-A- 20140 137 660      KR-A- 20190 064 480
KR-A- 20200 030 852      US-A1- 2016 294 015

## Description

<u>TECHNICAL FIELD</u>

The present application claims priority to Korean Patent Application No. 10-2021-0080424 filed on June 21, 2021 in the Republic of Korea. The present disclosure relates to an electrode for an electrochemical device. Particularly, the present disclosure relates to a multilayer electrode in which two or more electrode active material layers are stacked.

<u>BACKGROUND ART</u>

As technical development and needs for various instruments, including cellular phones, digital cameras, notebook computers, electric vehicles, or the like, have been increased, secondary batteries as energy sources have been increasingly in demand. In addition, among such secondary batteries, lithium secondary batteries having high energy density and operating voltage, long cycle life and a low self-discharge rate have been commercialized and used widely.

Such lithium secondary batteries generally use, as a positive electrode active material, lithiated cobalt oxide ($LiCoO_2$) having a layered crystal structure, $LiMnO_2$ having a layered crystal structure, lithiated manganese oxide, such as $LiMnO_2$, having a spinel crystal structure, or lithiated nickel oxide ($LiNiO_2$). In addition, a carbonaceous material is used frequently as a negative electrode active material. Recently, as the need for highenergy lithium secondary batteries has been increased, there has been considered combined use with a silicon-based material or silicon oxide-based material having an effective capacity at least 10 times higher than the effective capacity of the carbonaceous material.

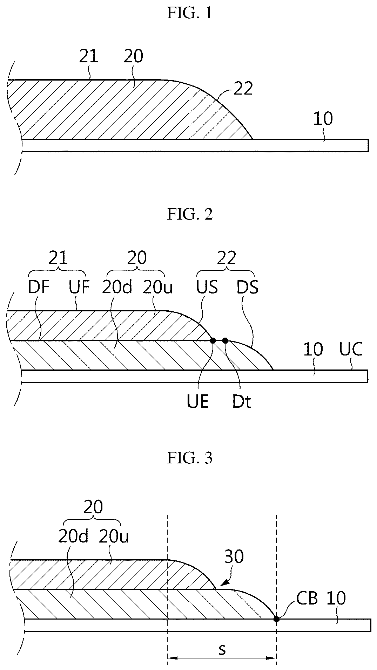

Meanwhile, an electrode used for such lithium secondary batteries is obtained by applying an electrode active material slurry including an electrode active material to at least one surface of an electrode current collector, followed by drying. Herein, the electrode has been manufactured generally with a single electrode active material layer (see FIG. 1). However, as a high-loading electrode used for a high-loading battery has been increasingly in demand, manufacture of an electrode including a single electrode active material layer have caused problems of degradation of the durability and performance of the electrode due to an excessively increased thickness of the electrode active material layer. In addition, when a single electrode active material layer is formed by blending a plurality of electrode active materials in order to improve the battery performance, difference types of active materials cause an interference effect, resulting in degradation of the battery performance. Therefore, some attempts have been made to form a multilayer-type electrode active material in the manufacture of a battery so that each layer may have its specialized function, and to improve the characteristics of the electrode and the performance of the battery. According to the related art, when a multilayer structured electrode is manufactured, an elongated sloped portion is formed in the electrode active material layer so that no level difference may be generated between the upper sublayer and the lower sublayer. However, when the sloped portion (i.e. portion having a smaller electrode active material loading amount) is present at a high ratio in such an electrode, there is a problem in that the electrode capacity is decreased. Particularly, when the proportion of the sloped portion is high in the negative electrode, it is difficult to intercalate Li migrated from the opposite positive electrode sufficiently to cause an increase in lithium deposition on the negative electrode surface, resulting in degradation of the battery performance undesirably. US 2016/294015 A1 relates to a secondary battery including an electrode assembly wherein the electrode has a multilayer structure.

<u>DISCLOSURE</u>

<u>Technical Problem</u>

The present disclosure is designed to solve the problems of the related art, and therefore the present disclosure is directed to providing an electrode which has an adequate proportion of a sloped portion and stair width at the end of an electrode active material and thus facilitates control of the capacity ratio between the positive electrode and the negative electrode.

<u>Technical Solution</u>

According to the first embodiment, there is provided, as disclosed in the attached set of claims, an electrode for an electrochemical device, which includes: a current collector; and an electrode active material layer formed on at least one surface of the current collector,

wherein the electrode active material layer includes a lower sublayer formed on the surface of the current collector and an upper sublayer disposed on the top surface of the lower sublayer,

each sublayer has a sloped portion with a decreased thickness at the end of its outer circumference, and thus the sloped portion of the lower sublayer does not coincide with the sloped portion of the upper sublayer at the end of the outer circumference of the electrode active material layer, thereby forming a stair portion, and

difference (D-d) between the electrode thickness (d) at a portion (W2) corresponding to 75±15% of the distance from the terminal end (UE) toward the transition portion (Ut) and the electrode thickness (D) at the flat portion (UF) of the upper sublayer, at the shortest distance (W1) from the transition portion (Ut) of the upper sublayer to the terminal end (UE) of the sloped portion, is less than 12% based on 100% of the thickness (D) of the flat portion (UF), and the transition portion (Ut) is a boundary between the flat portion (UF) and the sloped portion (US) and means a point where the flat portion ends and the sloped portion begins, wherein the region within 10 mm from the boundary (transition portion) between the sloped portion (US) and the flat portion (UF) of the upper sublayer toward the flat portion (21) has a thickness corresponding to ±1.5% based on the average thickness of the remaining flat portion (21) except the region.

According to the second embodiment, there is provided the electrode for an electrochemical device as defined in the first embodiment, wherein the current collector is provided with an uncoated portion which is not coated with the electrode active material layer, at the end of the outer circumference thereof, and the stair portion is disposed within 5 mm from the boundary between the uncoated portion and the coated portion which is coated with the electrode active material layer.

According to the third embodiment, there is provided the electrode for an electrochemical device as defined in the second embodiment, wherein the lower sublayer of the electrode active material layer has a thickness of 100-160 $\mu$m.

According to the fourth embodiment, there is provided the electrode for an electrochemical device as defined in any one of the first to the third embodiments, wherein the difference (D-d) between the electrode thickness (d) at any position (R) in the portion (W2) corresponding to 75±15% of the distance from the terminal end (UE) and the electrode thickness (D) at the flat portion (UF) of the upper sublayer is less than 15 $\mu$m.

According to the fifth embodiment, there is provided the electrode for an electrochemical device as defined in any one of the first to the fourth embodiments, wherein the region within 10 mm from the boundary (transition portion) between the sloped portion (US) and the flat portion (UF) of the upper sublayer toward the flat portion has a thickness corresponding to ±1.5% based on the average thickness of the remaining flat portion except the region.

According to the sixth embodiment, there is provided the electrode for an electrochemical device as defined in any one of the first to the fifth embodiments, which is a negative electrode.

According to the seventh embodiment, there is provided an electrochemical device including the electrode as defined in any one of the first to the sixth embodiments.

According to the eighth embodiment, there is provided a method for manufacturing the electrode as defined in any one of the first to the sixth embodiments, including the steps of:

(S1) preparing an electrode slurry for a lower sublayer including a first electrode active material, a first binder and a first conductive material, and an electrode slurry for an upper sublayer including a second electrode active material, a second binder and a second conductive material; and

(S2) applying the electrode slurry for a lower sublayer and the electrode slurry for an upper sublayer prepared in step (S1), simultaneously or sequentially, to at least one surface of an electrode current collector and drying them at the same time to form a lower sublayer disposed on at least one surface of the electrode current collector and an upper sublayer disposed on the top surface of the lower sublayer.

According to the ninth embodiment, there is provided the method as defined in the eighth embodiment, wherein the stair portion is formed due to the discordance of the sloped portion of the lower sublayer with the sloped portion of the upper sublayer at the end of the outer circumference of the electrode active material layer by controlling the coating gap and coating width of a slot die, when coating the slurry for a lower sublayer and the slurry for an upper sublayer.

According to the tenth embodiment, there is provided the electrochemical device as defined in the seventh embodiment, which includes an electrode assembly including a positive electrode, a negative electrode and a separator interposed between the positive electrode and the negative electrode, wherein the electrode assembly has an NP ratio of 1.00-1.30.

According to the eleventh embodiment, there is provided the electrochemical device as defined in the tenth embodiment, wherein the end portion of the positive electrode is disposed in the electrode assembly to be shorter than the end portion of the negative electrode.

According to the twelfth embodiment, there is provided the electrochemical device as defined in the tenth or the eleventh embodiment, wherein the electrode assembly has an NP ratio of 1.00 or more throughout the whole negative electrode and positive electrode facing each other.

Advantageous Effects

The electrode for an electrochemical device according to the present disclosure has a multilayer structure, and the electrode end portion has a stair-like structure due to the areal difference of each layer, thereby facilitating control of the capacity ratio of the negative electrode to the positive electrode. In terms of the electrode processing, the process for manufacturing an electrode including formation of a stair-like structure provides higher processing efficiency as compared to the process of accurately matching the ends of the electrodes. Therefore, when controlling the electrode manufacturing process to realize a multilayer electrode having an adequate stair width that is not excessively out of range, it is possible to enhance the processing efficiency and to control the capacity ratio of the resultant electrode.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a schematic view illustrating the shape of the single-layer electrode according to the related art.

FIG. 2 is a schematic view illustrating the shape of the stair-like end portion formed by stacking sublayers in the electrode active material layer according to an embodiment of the present disclosure.

FIGS. 3 and 4 are schematic views illustrating the level difference portion disposed in a specific range from the boundary between the electrode active materialcoated portion and the uncoated portion, in the electrode according to an embodiment of the present disclosure.

FIG. 5 illustrates the thickness measurement from the end portion to the flat portion in the electrode according to each of Examples and Comparative Examples.

FIG. 6 is a perspective view illustrating the manufacture of an electrode through a continuous process.

FIGS. 7 and 8 illustrate the position of each of the coated portion (C) and the uncoated portion (UC) disposed on a current collector (10).

FIG. 9 is a schematic view illustrating the shape of the electrode according to an embodiment of the present disclosure.

FIGS. 10 and 11 illustrate the thicknesses of the positive electrode and negative electrode applied to the battery according to each of Examples and Comparative Examples.

FIG. 12 illustrates the progress of NP ratio of the battery according to each of Examples and Comparative Examples.

FIG. 13 is a schematic view illustrating the end portion of the electrode assembly including the negative electrode and positive electrode according to each of Examples and Comparative Examples.

Hereinafter, preferred embodiments of the present disclosure will be described in detail with reference to the accompanying drawings. Prior to the description, it should be understood that the terms used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustration only, not intended to limit the scope of the disclosure, rather defined by the appended set of claims.

Throughout the specification, the expression 'a part includes an element' does not preclude the presence of any additional elements but rather means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to an electrode for an electrochemical device. The electrode may be a negative electrode or a positive electrode. According to the present disclosure, the electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

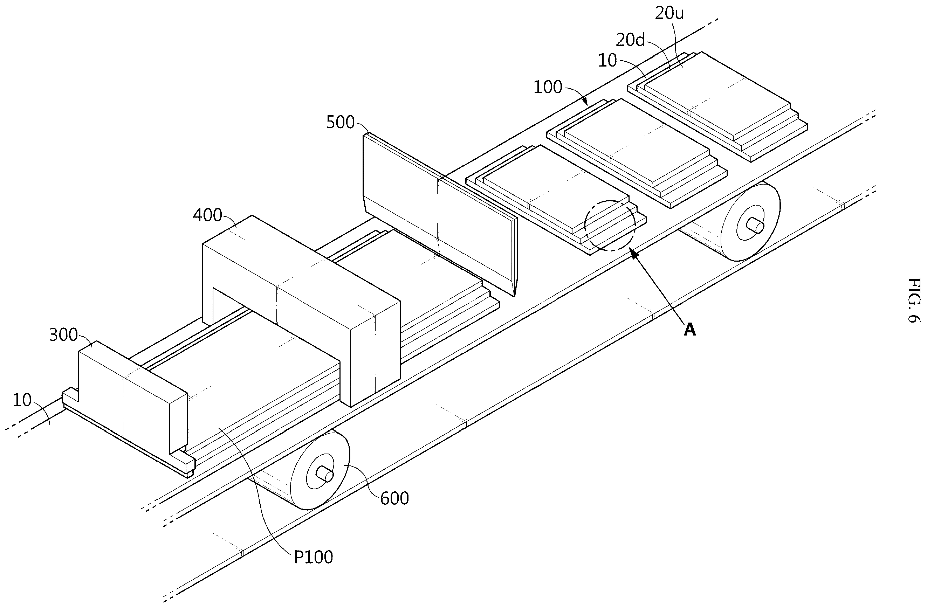

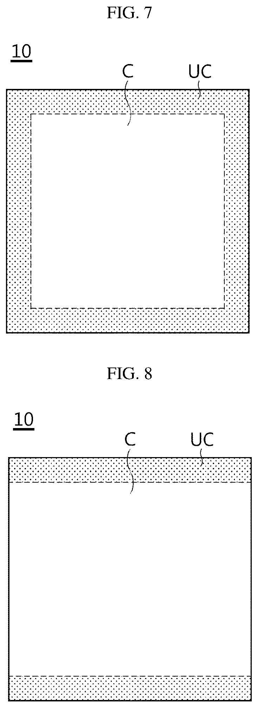

The electrode according to the present disclosure includes a current collector and an electrode active material layer formed on at least one surface of the current collector. The current collector includes a coated portion which is coated with the electrode active material layer, and an uncoated portion (UC) which is not coated with the electrode active material layer. According to the present disclosure, the uncoated portion is a portion having a predetermined width at the end of the outer circumference of the current collector, and may be formed totally around the end of the outer circumference of the current collector or merely at a part of the outer circumference. FIGS. 7 and 8 illustrate the coated portion (C) which is coated with the electrode active material and the uncoated portion (UC) on the current collector (10). The current collector may have a quadrangular planar shape, and the uncoated portion (UC) may be disposed with a predetermined width totally around the outer circumference as shown in FIG. 7, or may be disposed with a predetermined width inwardly from the ends at both sides facing each other as shown in FIG. 8. The uncoated portions (UC) disposed as shown in FIG. 8 may be applied to the electrode obtained by the manufacturing method using a roll-to-roll continuous process as shown in FIG. 6.

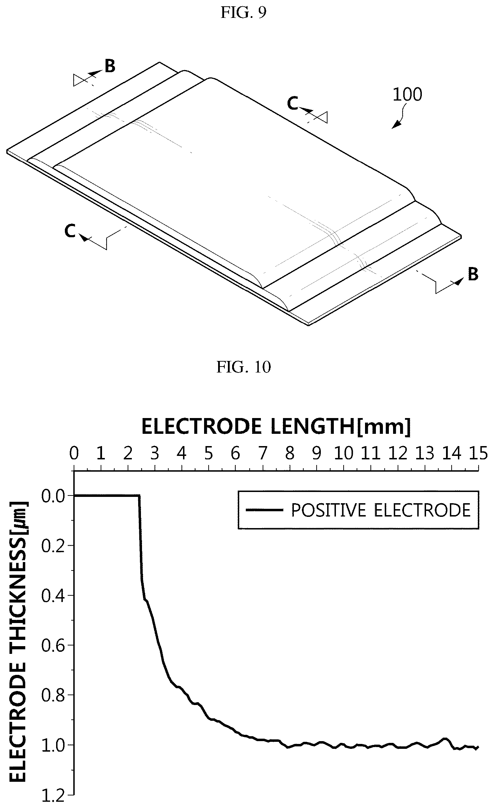

According to the present disclosure, the electrode active material layer includes at least two sublayers. Each sublayer has a flat portion (21, UF, DF); and a sloped portion (22, US, DS) linked to the flat portion and having a thickness decreasing toward the end of the outer circumference. The boundary between the flat portion and the sloped portion may have a predetermined angle and may show a sharply bent shape (not shown), or may have a curved shape as shown in the drawing. According to an embodiment of the present disclosure, each sublayer may have a quadrangular planar shape, and the whole circumference of the sublayer may have a sloped portion, or sloped portions may be disposed at both sides facing each other as shown in FIG. 9. The sloped portions disposed as shown in FIG. 9 may be applied to the electrode obtained by the manufacturing method using a roll-to-roll continuous process as shown in FIG. 6.

FIG. 2 is a schematic view illustrating the longitudinal section of the electrode according to an embodiment of the present disclosure at an optional point in the width direction, and shows the shape of a flat portion (21) and that of a sloped portion (22) in the electrode active material layer (20).

According to the present disclosure, the electrode active material layer may include sublayers, the sloped portions of which are not interconnected, and thus the end of the electrode active material layer may show a stair-like shape having a predetermined width. According to the present disclosure, the sloped portions of the sublayers are not interconnected, and thus the end of the electrode active material layer has a stair-like shape having a predetermined width.

FIG. 2 is a schematic view illustrating the shape of the electrode according to an embodiment of the present disclosure. Hereinafter, the present disclosure will be explained in more detail with reference to FIG. 2.

Referring to FIG. 2, the electrode according to an embodiment of the present disclosure includes a current collector (10) and an electrode active material layer (20) formed on at least one surface of the current collector. The current collector includes an uncoated portion (UC) having a predetermined width at the end of the outer circumference thereof. In other words, the electrode active material layer is not coated to the end, but a predetermined width toward the inside from the end is retained as an uncoated portion (UC), which is not coated with the electrode active material.

The electrode active material layer has a shape formed by stacking two sublayers, wherein the terminal sloped portions (US, DS) of the sublayers are not interconnected, and thus the end of the outer circumference of the electrode active material layer has a stair-like level difference. As used herein, the expression 'sloped portions are not interconnected' means that the terminal end (UE) of the upper sublayer (20u) is disposed on the flat portion (DF) of the lower sublayer (20d), and a part of the surface of the flat portion (DF) of the lower sublayer, i.e. a part of the flat portion (DF) toward the inside of the lower sublayer from the transition portion (Dt) of the lower sublayer is exposed to the outside. This will be referred to as 'stair portion (30)' hereinafter.

According to the present disclosure, the stair-like shape may be formed totally around the outer circumference of the electrode active material layer, or may be formed at least partially at the outer circumference. When the electrode has a rectangular shape, all of the four sides of the rectangle or at least one side of them may have a stair-like shape. As described above, when the electrode is manufactured through a roll-to-roll continuous process, such stair-like shapes may be disposed at two sides facing each other.

According to another embodiment of the present disclosure, the electrode may be prepared by forming a strip-like electrode member through a continuous process including providing a strip-like current collector continuously and coating the surface of the current collector with the electrode active material layer, and then winding the electrode member to obtain a wound type battery, or cutting it into a unit size. In the former case, the stair-like shapes may be formed at both end portions of the width of the electrode strip. In the case of the electrode obtained by cutting the electrode member, the stair-like shapes (A) may be formed at two sides facing each other (see FIG. 6).

FIG. 6 is a schematic view illustrating the method for manufacturing an electrode, including providing a strip-like current collector continuously. Referring to FIG. 6, the current collector (10) is provided by a conveying roller (600), and a slurry for forming the lower sublayer (20d) and a slurry for forming the upper sublayer (20u) of the electrode active material layer are applied sequentially through a double slot die (300). Herein, the level difference may be formed by controlling the width of each slot. Then, the coated slurry (P100) is dried by a drying unit (400) and is cut into a predetermined size by a cutter (500). Meanwhile, the electrode may have a controlled thickness by using a press before and/or after the cutting.

Meanwhile, according to an embodiment of the present disclosure, the stair portion (30), i.e. the exposed portion of the flat portion (DF) is positioned preferably at a specific region (s) from the boundary portion between the uncoated portion and the coated portion. According to a particular embodiment of the present disclosure, the region (s) may depend on the thickness of the lower sublayer. For example, when the thickness of the lower sublayer is increased, the extent of the region (s) may be increased. FIG. 3 is a schematic view illustrating the stair portion (30) disposed in the region (s). According to an embodiment of the present disclosure, the region (s) is disposed preferably within 5 mm from the boundary (CB) between the coated portion and the uncoated portion of the electrode active material layer, when the lower sublayer of the electrode has a thickness (based on the flat portion) of 100-160 $\mu$m (FIG. 3).

Meanwhile, according to an embodiment of the present disclosure, the difference between the electrode thickness at any position of the range (W2) from 60% (f) to 90% (g) in the sloped portion of the upper sublayer and the electrode thickness at the flat portion (UF) of the upper sublayer is less than 12%, preferably. In other words, when the shortest distance (W1) from the terminal end (UE) of the sloped portion (US) of the upper sublayer to the transition portion (Ut) is taken as 100%, the difference (D-d) between the electrode thickness (d) at a portion (W2) corresponding to 75±15% (60-90%) of the distance from the terminal end (UE) toward the transition portion (Ut) and the electrode thickness (D) at the flat portion (UF) of the upper sublayer is less than 12% based on 100% of the thickness (D) of the flat portion (UF). According to a particular embodiment of the present disclosure, any point (R) in the range corresponding to 60-90%, preferably 75-90%, of the distance from the terminal end (UE), based on 100% of the total distance (W1) from the terminal end (UE) toward the transition portion (Ut), shows a difference (D-d) between the total electrode thickness (D) and the electrode thickness (d) at point R of less than 12% based on the total electrode thickness (D). Meanwhile, the electrode thickness (D, d) as used herein is stated for the whole electrode active material layer including the upper sublayer and the lower sublayer.

As used herein, the transition portion (Ut, Dt) means a point where the flat portion ends and the sloped portion begins. Drawing numeral (Ut) means the transition portion of the upper sublayer, and drawing numeral (Dt) means the transition portion of the lower sublayer.

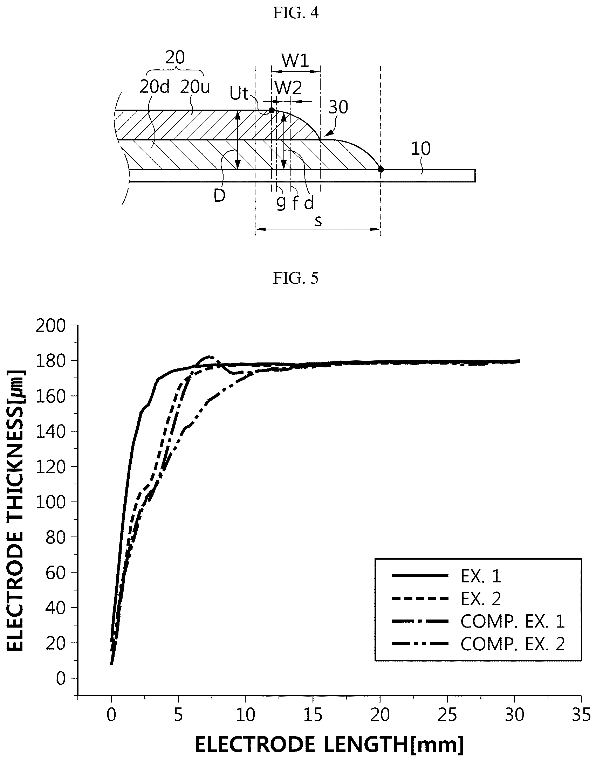

According to a particular embodiment, the different (D-d) may be less than 15 $\mu$m. Referring to FIG. 4, the range (W2) means a part corresponding to 60-90% (75±15%) of the length from the terminal end (UE) toward the transition portion (Ut) in the distance (W1) to the terminal end (UE) of the sloped portion of the upper sublayer from the transition portion (Ut), and the difference (D-d) between the electrode thickness (d) at any one point in the range (W2) and the electrode thickness (D) at the flat portion of the upper sublayer is less than 12% based on 100% of the thickness (D).

Meanwhile, according to an embodiment of the present disclosure, the flat portion (UF) of the upper sublayer preferably shows a small and uniform deviation in thickness. When coating the slurry for forming the upper sublayer, excessively high viscosity of the slurry or inadequate operation of the coating system control may cause non-uniform coating of the slurry for the upper sublayer. Particularly, the slurry may be localized at the end portion of the upper sublayer, and such a coating defect may remain even after drying, resulting in an excessive deviation in thickness in the upper sublayer. Considering this, the region within 10 mm from the boundary between the transition portion of the upper sublayer and the flat portion toward the flat portion preferably has an average thickness corresponding to ±1.5% as compared to the average thickness of the remaining flat portion except the region.

According to the present disclosure, the thickness may be measured by using a contact type or non-contact type thickness gauge. In general, any known thickness gauge may be used with no particular limitation to a specific device or method. For example, the electrode thickness may be measured by using a thickness gauge, such as a confocal sensor (AZO sensors Co.), KLA Alpah-Step Tencor D-600 or VL-50S-B (Mitutoyo Co.).

Meanwhile, according to an embodiment of the present disclosure, 'average thickness' of the flat portion may be obtained by determining the thickness values optionally at 10-20 points in the flat portion region within 10 mm from the boundary between the transition portion and the flat portion toward the flat portion and calculating the average value. For example, the average thickness may refer to the average value of thickness values at any 10 positions in the flat portion region.

Meanwhile, the structural characteristic of the dual-layer electrode according to the present disclosure may be satisfied by at least one of the sections in the longitudinal direction (B) of the electrode. At least one longitudinal section may satisfy the structural characteristic. According to an embodiment, at least one longitudinal section may satisfy the structural characteristic in the remaining internal region except the external width of 10% from each of the ends in the width direction (C) of the electrode (see FIG. 9).

The electrode may be a positive electrode. The positive electrode includes a current collector and a positive electrode active material layer formed on the surface of the current collector. The positive electrode active material layer may include a plurality of positive electrode active material particles and at least one of a conductive material and a binder resin. In addition, the positive electrode may further include various additives in order to supplement or improve the electrochemical properties.

The positive electrode active material is not particularly limited, as long as it may be used as a positive electrode active material of a lithium-ion secondary battery. Nonlimiting examples of the positive electrode active material may include any one selected from: layered compounds, such as lithium manganese composite oxides ($LiMn_2O_4$, $LiMnO_2$, or the like), lithium cobalt oxide ($LiCoO_2$), lithium nickel oxide ($LiNiO_2$), or those compounds substituted with one or more transition metals; lithium manganese oxides, such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; and $Fe_2(MoO_4)_3$; or a mixture of two or more of them. According to the present disclosure, the positive electrode may include, as a solid electrolyte material, at least one of a polymeric solid electrolyte, an oxide-based solid electrolyte and a sulfide-based solid electrolyte.

The current collector is electrically conductive and may include Al, Cu, or the like. Any suitable current collector known in the field of secondary batteries may be used depending on the polarity of the electrode.

The conductive material may be added in an amount of 1-20 wt% based on the total weight of the electrode mixture including the electrode active material. The conductive material is not particularly limited, as long as it causes no chemical change in the corresponding battery and has conductivity. Particular examples of the conductive material include any one selected from: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; and conductive materials, such as polyphenylene derivatives; or a mixture of two or more of them.

The binder resin is not particularly limited, as long as it is an ingredient which assists binding between the active material and the conductive material and binding to the current collector. Particular examples of the binder include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrenebutadiene rubber, fluoro-rubber, various copolymers, or the like. In general, the binder may be added in an amount of 1-30 wt% or 1-10 wt%, based on the total weight of the electrode layer.

The electrode may be a negative electrode. The negative electrode includes a current collector and a negative electrode active material layer formed on the surface of the current collector. The negative electrode active material layer may include a plurality of negative electrode active material particles and at least one of a conductive material and a binder resin. In addition, the negative electrode may further include various additives in order to supplement or improve the electrochemical properties.

The negative electrode active material may include carbonaceous materials, such as graphite, amorphous carbon, diamond-like carbon, fullerene, carbon nanotubes and carbon nanohorns, lithium metal materials, alloy-based materials based on silicon or tin, or the like, oxide-based materials, such as $Nb_2O_5$, $Li_5Ti_4O_{12}$ and $TiO_2$, or composite materials thereof. Reference will be made to the above description of the positive electrode about the conductive material, the binder resin and the current collector used for the negative electrode.

Meanwhile, the electrode according to an embodiment of the present disclosure may be obtained by the method described hereinafter. However, the following method for manufacturing an electrode is provided for illustrative purpose as one of the exemplary embodiments for realizing the shape of the electrode according to the present disclosure. Therefore, manufacture of the electrode according to the present disclosure is not limited to the following method, and any method may be used to obtain the electrode, as long as it can realize the above-described constitutional characteristics of the present disclosure.

The method includes the steps of:

(S1) preparing an electrode slurry for a lower sublayer including a first electrode active material, a first binder and a first conductive material, and an electrode slurry for an upper sublayer including a second electrode active material, a second binder and a second conductive material; and
(S2) applying the electrode slurry for a lower sublayer and the electrode slurry for an upper sublayer prepared in step (S1), simultaneously or sequentially, to at least one surface of an electrode current collector and drying them at the same time to form a lower sublayer disposed on at least one surface of the electrode current collector and an upper sublayer disposed on the top surface of the lower sublayer.

In the method according to an embodiment of the present disclosure, the current collector used as a substrate for forming the active material layer is not particularly limited, as long as it has conductivity, while not causing any chemical change in the corresponding battery. For example, copper, stainless steel, aluminum, nickel, titanium, baked carbon, copper or stainless steel surface-treated with carbon, nickel, titanium, silver, etc., aluminum-cadmium alloy, or the like may be used.

Although the current collector is not particularly limited in its thickness, it may have a currently used thickness of 3-500 $\mu$m.

According to an embodiment of the present disclosure, the step of forming a lower sublayer and the step of forming an upper sublayer may be carried out sequentially or simultaneously.

**In** other words, the step of forming a lower sublayer and upper sublayer may include: applying the slurry for a lower sublayer completely to at least one surface of the electrode current collector, applying the slurry for an upper sublayer to the top of the completely applied slurry for a lower sublayer, and carrying out drying. **In** a variant, the step of forming a lower sublayer and upper sublayer may include: applying the slurry for a lower sublayer completely to at least one surface of the electrode current collector, simultaneously applying the slurry for an upper sublayer to the top of the completely applied slurry for a lower sublayer, and carrying out drying.

Particularly, the lower sublayer and the upper sublayer may be formed sequentially by coating and drying the slurry for a lower sublayer first on the current collector, and then coating and drying the slurry for an upper sublayer thereon. In a variant, the two types of slurry may be coated simultaneously by using a device, such as a double slot die, and then be dried to form an electrode active material layer in which the upper sublayer and the lower sublayer are stacked.

The slurry may be coated by using any conventional method with no particular limitation. For example, the slurry may be coated through a coating process using a slot die, a Mayer bar coating process, a gravure coating process, a dip coating process, a spray coating process, or the like.

Meanwhile, according to an embodiment of the present disclosure, when coating the slurry for each layer, the coating gap and coating width of the slot die may be controlled (the shim of the slot die may be controlled) so that the stair portion of the lower sublayer and the upper sublayer may be disposed specifically within a predetermined range at the end of the outer circumference of the electrode active material layer. For example, when coating the slurry for each layer by using the slot die, the width of the slot for forming each sublayer may be adjusted to realize an electrode in which the stair portion is disposed within a predetermined range. If the dual slot die is used to apply the slurry, an electrode having a stair portion may be formed when the width of the slot for applying the slurry for the upper sublayer is smaller than the width of the slot for applying the slurry for the lower sublayer. Actually, in the process for manufacturing the electrode, the possibility that the width of the slot die for the upper sublayer and that of the slot die for the lower sublayer do not match perfectly cannot be ruled out. In addition, even though the width of the slot die for the upper sublayer and that of the slot die for the lower sublayer match perfectly, the width of the slot die does not match perfectly with the width of the ejected slurry or the dimension of the electrode obtained through the solidification of the slurry due to the viscosity of the slurry or the concentration of the solid content. According to the present disclosure, the tolerance of such errors is limited to a predetermined range so that the dimensional degree of freedom in the process may be ensured, which is beneficial in terms of the processing efficiency.

According to an embodiment of the present disclosure, the electrode may be obtained by forming an elongated electrode slip by using a continuous process of applying the electrode slurry continuously to the surface of a current collector slip through a slot die, and cutting the electrode slip at a predetermined interval. Herein, the end in the width direction of the electrode slip corresponds to the end portion of the electrode. In such a continuous process, it is possible to control the level difference formed in a specific stair between the upper sublayer and the lower sublayer to be disposed within a predetermined range by controlling the slot die width, the ejection rate, the electrode slip conveying rate, or the like.

In another aspect of the present disclosure, there is provided an electrochemical device, such as a secondary battery, including the above-described electrode. The battery includes an electrode assembly, which may include the positive electrode and/or the negative electrode, wherein a separator is interposed between the positive electrode and the negative electrode to insulate both electrodes from each other.

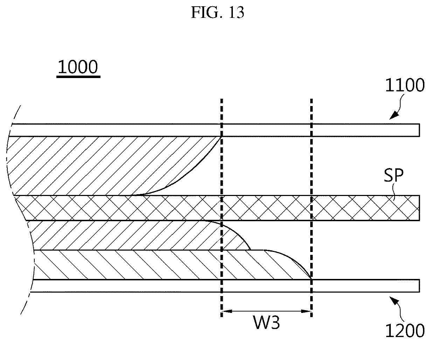

According to an embodiment of the present disclosure, both of the positive electrode and the negative electrode may be the dual layer electrodes having the above-described characteristics. In this case, the positive electrode may have a width smaller than the width of the negative electrode, and the N/P ratio (ratio of capacity per unit area between the negative electrode and the positive electrode) may be set to 1.00-1.30 (100-130%). In other words, the end portion of the positive electrode may be disposed with a shorter length as compared to the end portion of the negative electrode (see FIG. 13). For example, the N/P ratio may be 1.25 or less, or 1.20 or less, and may be 1.00-1.19, 1.00-1.18, or 1.00-1.15.

Meanwhile, according to an embodiment of the present disclosure, the electrode assembly may show an NP ratio of 1.00 (100%) or more throughout the whole negative electrode and positive electrode facing each other. Preferably, the electrode assembly shows an NP ratio of 1.00 (100%) or more throughout the whole negative electrode and positive electrode facing each other.

Herein, each of the width of the positive electrode and the width of the negative electrode does not mean the width of the current collector, but means the terminal end coated with the electrode active material in each electrode. In other word, each of the width of the positive electrode and the width of the negative electrode means the boundary between the uncoated portion (UC) and the coated portion (C). According to the present disclosure, the terminal end of the positive electrode may be shorter than the terminal end of the negative electrode. According to an embodiment of the present disclosure, the positive electrode (active material layer) may be shorter than the negative electrode (active material layer), and the difference between the terminal end of the positive electrode active material layer and that of the negative electrode active material layer may be 0.1-10 mm. Particularly, the difference (W3) between the terminal end of the positive electrode active material layer and that of the negative electrode active material layer may be 0.1 mm or more, 0.5 mm or more, or 1 mm or more. In addition, the difference (W3) between the terminal end of the positive electrode active material layer and that of the negative electrode active material layer may be 4.5 mm or less, 3.5 mm or less, or 3.0 mm or less. For example, the terminal end of the positive electrode may be shorter than the terminal end of the negative electrode by 1.0 $\pm$0.6 mm. When the width of the positive electrode and that of the negative electrode are designed in this manner, it is easy to design the target NP ratio, and it is possible to allow the negative electrode to accept the lithium ions migrated from the positive electrode to the highest degree (100%).

Meanwhile, according to an embodiment of the present disclosure, even if the negative electrode and the positive electrode are designed in the above-described manner, a difference between thickness (D) and thickness (d) of 12% or more based on thickness (D) may generate a zone having an N/P ratio of less than 100%. Therefore, in this case, the lithium ions of the positive electrode cannot be accepted to cause formation and growth of lithium dendrite on the negative electrode surface.

In the case of Comparative Example 2, D-d at W2 is 12% or more to generate a zone with a reversed N/P ratio undesirably.

The separator may be any separator, as long as it is used in the field of secondary batteries and insulates the positive electrode and the negative electrode from each other, while providing ion channels. According to an embodiment of the present disclosure, the separator generally includes a porous membrane, woven web, non-woven web made of resin, or the like, and the resin may include a polyolefin resin, such as polypropylene or polyethylene, a polyester resin, an acryl resin, a styrene resin or a nylon resin. Particularly, a polyolefin-based microporous membrane has excellent ion permeability and property of isolating the positive electrode and the negative electrode physically from each other, and thus is used preferably. In addition, if necessary, the separator may have a coating layer containing inorganic particles, wherein the inorganic particles may include insulating oxide, nitride, sulfide, carbide, or the like, preferably $TiO_2$ or $Al_2O_3$.

Further, the electrolyte may include any one selected from the organic solvents including cyclic carbonate, such as ethylene carbonate, propylene carbonate, vinylene carbonate or butylene carbonate, linear carbonate, such as ethyl methyl carbonate (EMC), diethyl carbonate (DEC), dimethyl carbonate (DMC) or dipropyl carbonate (DPC), aliphatic carboxylate, $\gamma$-lactone, such as $\gamma$-butyrolactone, linear ether, cyclic ether, or the like, or a mixture of two or more of them. In addition, a lithium salt may be dissolved in such organic solvents.

In still another aspect of the present disclosure, there are provided a battery module including the secondary battery as a unit cell, a battery pack including the battery module, and a device including the battery pack as a power source. Herein, particular examples of the device may include but are not limited to: power tools driven by an electric motor; electric cars, including electric vehicles (EVs), hybrid electric vehicles (HEVs), plug-in hybrid electric vehicles (PHEVs), or the like; electric carts, including electric bikes (E-bikes) and electric scooters (E-scooters); electric golf carts; electric power storage systems; or the like.

<u>MODE FOR DISCLOSURE</u>

Hereinafter, the present disclosure will be explained in detail with reference to Examples. The following examples are merely for illustrative purposes, and the scope of the present disclosure is not limited thereto.

**[Manufacture of electrode]**

**Example 1: Manufacture of Negative Electrode**

Earthy natural graphite having an average particle diameter ($D_{50}$) of 11 $\mu$m, carbon black, carboxymethyl cellulose (CMC) and styrene butadiene rubber (SBR) were mixed with water at a weight ratio of 94:1.5:2:2.5 to prepare a slurry for a negative electrode active material layer having a concentration of 50 wt% of the remaining ingredients except water. Next, the slurry was applied to the surface of copper foil (thickness 10 $\mu$m) by using a slot die at a running speed of 40 m/min (lower sublayer). Then, the slurry was applied again to the surface of the coated slurry for a negative electrode active material layer at the same speed (upper sublayer). Each of the upper sublayer and the lower sublayer was set to have a negative electrode active material loading amount of 8 mg/cm$^2$ based on the electrode area (total 16 mg/cm$^2$). The copper foil coated with the slurry for a negative electrode active material layer was dried by being passed through a hot air oven having a length of 60 m, wherein the oven temperature was controlled so that it might be maintained at 130°C. After that, roll pressing was carried out with a target thickness set to 180 $\mu$m to obtain a negative electrode having a density of 3.45 g/cc. It can be seen that the resultant negative electrode has a level difference formed at a position within 5 mm from the end of the coated portion, and the difference in thickness, D-d, shows a value of less than 12% based on thickness (D).

**Example 2**

A negative electrode was obtained in the same manner as Example 1, except that the coating gap and coating width of the slot die were controlled (the shim of the slot die was controlled) during the manufacture of the electrode. It can be seen that the resultant negative electrode has a level difference formed at a position within 5 mm from the end of the coated portion, and the difference in thickness, D-d, shows a value of less than 12% based on thickness (D).

**Comparative Example 1**

A negative electrode was obtained in the same manner as Example 1, except that the coating gap and coating width of the slot die were controlled (the shim of the slot die was controlled) during the manufacture of the electrode. After determining the thickness of the electrode obtained from Comparative Example 1 as shown in FIG. 5, it is shown that a level difference is formed at a position within 5 mm from the end of the coated portion, but the flat portion of the upper sublayer is not uniform, and thus a D-d value of less than 12% based on thickness (D) cannot be determined. In addition, an interlayer spacing portion is generated upon the stacking with the other battery element, and thus it is shown that the electrode is not suitable for manufacturing a battery.

**Comparative Example 2**

A negative electrode was obtained in the same manner as Example 1, except that the coating gap and coating width of the slot die were controlled (the shim of the slot die was controlled) during the manufacture of the electrode. In the case of Comparative Example 2, no level difference is formed, and thus D-d is 12% or more based on thickness (D). In addition, when applying the electrode to the manufacture of a battery, Comparative Example 2 has an increased zone with an N/P ratio of less than 100%, which is not preferred for the manufacture of a battery.

**[Manufacture of Battery]**

$Li(Ni_{0.6}Mn_{0.2}Co_{0.2})O_2$ (NCM-622) as a positive electrode active material, carbon black as a conductive material and polyvinylidene fluoride (PVDF) as a binder were added to water as a dispersion medium at a weight ratio of 96:2:2 to prepare a positive electrode active material slurry. The slurry was coated on one surface of an aluminum current collector having a thickness of 15 $\mu$m, and drying and pressing were carried out under the same condition as the negative electrode to obtain a positive electrode. Herein, the positive electrode active material layer was controlled to provide a battery with an NP ratio of 1.18 (118%, about 27.7 $cm^2$), considering the theoretical discharge capacity of NMC622. Then, $LiPF_6$ was dissolved in a mixed organic solvent containing ethylene carbonate (EC), dimethyl carbonate (DMC) and diethyl carbonate (DEC) at a volume ratio of 1:2:1 to a concentration of 1.0 M to prepare a non-aqueous electrolyte. A polyolefin separator was interposed between the positive electrode and each of the negative electrodes according to Examples 1 and 2 and Comparative Example 2 to prepare an electrode assembly. In the electrode assembly, both electrodes were allowed to face each other in such a manner that the terminal end of the positive electrode active material layer might be positioned 2.5 mm inward than the terminal end of the negative electrode active material layer (see the accompanying drawings). After that, the electrode assembly was received in a pouch, and the electrolyte was injected thereto to obtain a lithium secondary battery.

As used herein, 'NP ratio' refers to the ratio of the negative electrode capacity to the positive electrode capacity based on the discharge capacity of each electrode active material, and can be calculated according to the following Formula 1.

N/P ratio = (Negative electrode active material loading amount $\times$ Discharge capacity of negative electrode active material)/(Positive electrode active material loading amount $\times$ Discharge capacity of positive electrode active material)     [Formula 1]

Meanwhile, the N/P ratio may be provided as a value expressed in the unit of percentage (%) (1.18$\rightarrow$ 118%).

The positive electrode and the negative electrode had the same thickness, and the N/P ratio was set to 1.18.

The battery using the negative electrode according to Example 1 was designated as Example 1-A, the battery using the negative electrode according to Example 2 was designated as Example 2-A, and the battery using the negative electrode according to Comparative Example 2 was designated as Comparative Example 2-A.

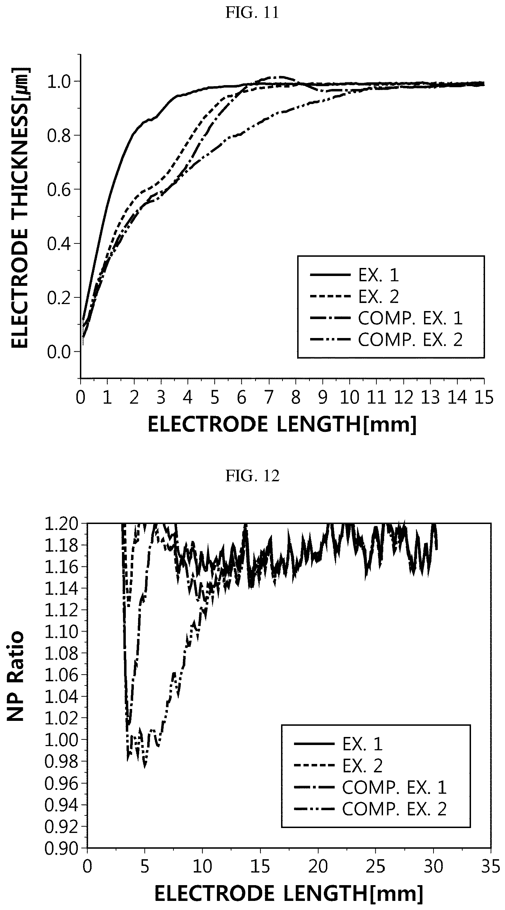

FIG. 13 is a schematic view illustrating the end portion of the electrode assembly (1000) using the negative electrode (1200) according to each of Examples and Comparative Example and the positive electrode (1100). The electrode assembly includes a separator (SP) interposed between the negative electrode and the positive electrode. The thickness measured actually in each Example is shown in FIGS. 10 and 11. In the electrode assembly, the shortest distance of the difference between the terminal end of the positive electrode and that of the negative electrode is marked as W3.

**[Observation of Electrode Surface]**

Each of the batteries according to Examples 1-A and 2-A and Comparative Example 2-A was subjected to 5 charge/discharge cycles. Each battery was charged/discharged at 23°C. The pouch of each battery was opened to remove the electrode assembly, and the electrode assembly was disintegrated to obtain the negative electrode. After observing the negative electrode surface, it can be seen that the negative electrode taken out from the battery according to each of Examples 1-A and 2-A causes no lithium metal deposition on the surface thereof. On the contrary, it can be seen that the negative electrode taken out from the battery according to Comparative Example 2-A causes lithium metal deposition on the surface at a position corresponding to an NP ratio of l or less.

**[Determination of N/P Ratio]**

    a. thickness of electrode at each point ($\mu$m)
    b. ratio of electrode thickness at each point based on average electrode thickness at flat portion
    (average electrode thickness at flat portion of negative electrode: 180 $\mu$m, average electrode thickness at flat portion of positive electrode: 105 $\mu$m)

The thickness measured at each point of the positive electrode and negative electrode in the battery according to each of Examples 1-A and 2-A and Comparative Example 2-A is recorded in the following Tables 1-3 together with the N/P ratio at each point. As can be seen from Tables 1-3, the battery according to each of Examples has no portion having an N/P ratio of less than 1. On the contrary, the battery according to Comparative Examples is shown to have a portion (region in which the positive electrode capacity is higher) having an N/P ratio of less than 1. When the N/P ratio is less than 1, lithium deposition may occur undesirably during the operation of the battery. Meanwhile, the progress of NP ratio in each battery is shown in FIG. 12. Meanwhile, Tables 1-3 show the results up to 6.3 mm in length of the electrode, and see FIG. 11 for the results of the range beyond 6.3 mm.

[Table 1]

| Battery Example 1-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 0.1 | 21.025 | 0.117 | 0.000 | 0.000 | 0.000 |
| 0.2 | 28.852 | 0.161 | 0.000 | 0.000 | 0.000 |
| 0.3 | 37.994 | 0.212 | 0.000 | 0.000 | 0.000 |
| 0.4 | 46.567 | 0.260 | 0.000 | 0.000 | 0.000 |
| 0.5 | 55.533 | 0.310 | 0.000 | 0.000 | 0.000 |
| 0.6 | 64.391 | 0.359 | 0.000 | 0.000 | 0.000 |
| 0.7 | 72.598 | 0.405 | 0.000 | 0.000 | 0.000 |
| 0.8 | 80.506 | 0.449 | 0.000 | 0.000 | 0.000 |
| 0.9 | 88.428 | 0.494 | 0.000 | 0.000 | 0.000 |
| 1 | 95.685 | 0.534 | 0.000 | 0.000 | 0.000 |
| 1.1 | 101.816 | 0.568 | 0.000 | 0.000 | 0.000 |
| 1.2 | 107.852 | 0.602 | 0.000 | 0.000 | 0.000 |
| 1.3 | 113.319 | 0.633 | 0.000 | 0.000 | 0.000 |

(continued)

| Battery Example 1-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 1.4 | 118.690 | 0.663 | 0.000 | 0.000 | 0.000 |
| 1.5 | 123.126 | 0.687 | 0.000 | 0.000 | 0.000 |
| 1.6 | 128.307 | 0.716 | 0.000 | 0.000 | 0.000 |
| 1.7 | 132.173 | 0.738 | 0.000 | 0.000 | 0.000 |
| 1.8 | 136.514 | 0.762 | 0.000 | 0.000 | 0.000 |
| 1.9 | 139.715 | 0.780 | 0.000 | 0.000 | 0.000 |
| 2 | 143.486 | 0.801 | 0.000 | 0.000 | 0.000 |
| 2.1 | 145.752 | 0.814 | 0.000 | 0.000 | 0.000 |
| 2.2 | 148.288 | 0.828 | 0.000 | 0.000 | 0.000 |
| 2.3 | 149.617 | 0.835 | 0.000 | 0.000 | 0.000 |
| 2.4 | 151.598 | 0.846 | 0.000 | 0.000 | 0.000 |
| 2.5 | 152.344 | 0.850 | 35.214 | 0.334 | 3.001 |
| 2.6 | 153.578 | 0.857 | 43.848 | 0.416 | 2.430 |
| 2.7 | 153.388 | 0.856 | 44.672 | 0.424 | 2.382 |
| 2.8 | 154.609 | 0.863 | 48.014 | 0.456 | 2.234 |
| 2.9 | 155.369 | 0.867 | 51.324 | 0.487 | 2.100 |
| 3 | 157.716 | 0.880 | 55.952 | 0.531 | 1.956 |
| 3.1 | 159.411 | 0.890 | 61.614 | 0.585 | 1.795 |
| 3.2 | 161.676 | 0.902 | 65.038 | 0.617 | 1.725 |
| 3.3 | 163.657 | 0.914 | 70.381 | 0.668 | 1.613 |
| 3.4 | 165.637 | 0.925 | 73.486 | 0.698 | 1.564 |
| 3.5 | 167.238 | 0.933 | 76.224 | 0.724 | 1.522 |
| 3.6 | 168.472 | 0.940 | 78.686 | 0.747 | 1.485 |
| 3.7 | 169.503 | 0.946 | 79.752 | 0.757 | 1.474 |
| 3.8 | 169.313 | 0.945 | 80.891 | 0.768 | 1.452 |
| 3.9 | 170.168 | 0.950 | 80.981 | 0.769 | 1.458 |
| 4 | 170.263 | 0.950 | 81.852 | 0.777 | 1.443 |
| 4.1 | 171.009 | 0.955 | 83.224 | 0.790 | 1.426 |
| 4.2 | 171.389 | 0.957 | 84.300 | 0.800 | 1.410 |
| 4.3 | 172.243 | 0.961 | 86.367 | 0.820 | 1.384 |
| 4.4 | 172.433 | 0.962 | 87.781 | 0.833 | 1.363 |
| 4.5 | 173.179 | 0.967 | 87.995 | 0.835 | 1.365 |
| 4.6 | 173.369 | 0.968 | 87.857 | 0.834 | 1.369 |
| 4.7 | 174.129 | 0.972 | 88.976 | 0.845 | 1.358 |
| 4.8 | 174.034 | 0.971 | 90.700 | 0.861 | 1.331 |
| 4.9 | 175.065 | 0.977 | 92.610 | 0.879 | 1.311 |
| 5 | 174.780 | 0.976 | 94.176 | 0.894 | 1.288 |

(continued)

| Battery Example 1-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 5.1 | 175.160 | 0.978 | 94.705 | 0.899 | 1.283 |
| 5.2 | 174.875 | 0.976 | 94.667 | 0.899 | 1.282 |
| 5.3 | 175.350 | 0.979 | 95.310 | 0.905 | 1.276 |
| 5.4 | 175.539 | 0.980 | 95.429 | 0.906 | 1.276 |
| 5.5 | 175.824 | 0.981 | 96.224 | 0.914 | 1.268 |
| 5.6 | 175.729 | 0.981 | 97.091 | 0.922 | 1.256 |
| 5.7 | 175.729 | 0.981 | 97.543 | 0.926 | 1.250 |
| 5.8 | 175.634 | 0.980 | 98.205 | 0.932 | 1.241 |
| 5.9 | 175.824 | 0.981 | 98.643 | 0.937 | 1.237 |
| 6 | 175.824 | 0.981 | 99.886 | 0.948 | 1.221 |
| 6.1 | 176.204 | 0.984 | 100.271 | 0.952 | 1.219 |
| 6.2 | 176.760 | 0.987 | 101.229 | 0.961 | 1.211 |
| 6.3 | 176.760 | 0.987 | 101.471 | 0.963 | 1.208 |

[Table 2]

| Battery Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 0.1 | 9.419 | 0.053 | 0.000 | 0.000 | 0.000 |
| 0.2 | 13.886 | 0.078 | 0.000 | 0.000 | 0.000 |
| 0.3 | 19.904 | 0.111 | 0.000 | 0.000 | 0.000 |
| 0.4 | 26.345 | 0.147 | 0.000 | 0.000 | 0.000 |
| 0.5 | 32.725 | 0.183 | 0.000 | 0.000 | 0.000 |
| 0.6 | 39.807 | 0.222 | 0.000 | 0.000 | 0.000 |
| 0.7 | 46.466 | 0.260 | 0.000 | 0.000 | 0.000 |
| 0.8 | 52.835 | 0.295 | 0.000 | 0.000 | 0.000 |
| 0.9 | 58.574 | 0.327 | 0.000 | 0.000 | 0.000 |
| 1 | 64.023 | 0.358 | 0.000 | 0.000 | 0.000 |
| 1.1 | 69.482 | 0.388 | 0.000 | 0.000 | 0.000 |
| 1.2 | 74.228 | 0.415 | 0.000 | 0.000 | 0.000 |
| 1.3 | 78.756 | 0.440 | 0.000 | 0.000 | 0.000 |
| 1.4 | 82.582 | 0.461 | 0.000 | 0.000 | 0.000 |
| 1.5 | 86.408 | 0.483 | 0.000 | 0.000 | 0.000 |
| 1.6 | 89.809 | 0.502 | 0.000 | 0.000 | 0.000 |
| 1.7 | 93.066 | 0.520 | 0.000 | 0.000 | 0.000 |
| 1.8 | 95.682 | 0.534 | 0.000 | 0.000 | 0.000 |
| 1.9 | 98.381 | 0.549 | 0.000 | 0.000 | 0.000 |

(continued)

| Battery Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 2 | 100.645 | 0.562 | 0.000 | 0.000 | 0.000 |
| 2.1 | 102.413 | 0.572 | 0.000 | 0.000 | 0.000 |
| 2.2 | 103.757 | 0.580 | 0.000 | 0.000 | 0.000 |
| 2.3 | 105.598 | 0.590 | 0.000 | 0.000 | 0.000 |
| 2.4 | 106.663 | 0.596 | 0.000 | 0.000 | 0.000 |
| 2.5 | 107.583 | 0.601 | 35.214 | 0.334 | 2.121 |
| 2.6 | 108.297 | 0.605 | 43.848 | 0.416 | 1.715 |
| 2.7 | 109.496 | 0.612 | 44.672 | 0.424 | 1.702 |
| 2.8 | 110.489 | 0.617 | 48.014 | 0.456 | 1.597 |
| 2.9 | 112.050 | 0.626 | 51.324 | 0.487 | 1.516 |
| 3 | 113.466 | 0.634 | 55.952 | 0.531 | 1.408 |
| 3.1 | 115.379 | 0.644 | 61.614 | 0.585 | 1.300 |
| 3.2 | 117.147 | 0.654 | 65.038 | 0.617 | 1.250 |
| 3.3 | 119.556 | 0.668 | 70.381 | 0.668 | 1.179 |
| 3.4 | 121.965 | 0.681 | 73.486 | 0.698 | 1.152 |
| 3.5 | 124.871 | 0.697 | 76.224 | 0.724 | 1.137 |
| 3.6 | 127.270 | 0.711 | 78.686 | 0.747 | 1.123 |
| 3.7 | 130.103 | 0.727 | 79.752 | 0.757 | 1.132 |
| 3.8 | 133.080 | 0.743 | 80.891 | 0.768 | 1.142 |
| 3.9 | 135.986 | 0.760 | 80.981 | 0.769 | 1.166 |
| 4 | 138.747 | 0.775 | 81.852 | 0.777 | 1.177 |
| 4.1 | 141.652 | 0.791 | 83.224 | 0.790 | 1.182 |
| 4.2 | 144.485 | 0.807 | 84.300 | 0.800 | 1.190 |
| 4.3 | 147.173 | 0.822 | 86.367 | 0.820 | 1.183 |
| 4.4 | 149.727 | 0.836 | 87.781 | 0.833 | 1.184 |
| 4.5 | 152.343 | 0.851 | 87.995 | 0.835 | 1.202 |
| 4.6 | 154.680 | 0.864 | 87.857 | 0.834 | 1.222 |
| 4.7 | 156.531 | 0.874 | 88.976 | 0.845 | 1.221 |
| 4.8 | 158.650 | 0.886 | 90.700 | 0.861 | 1.214 |
| 4.9 | 160.491 | 0.896 | 92.610 | 0.879 | 1.203 |
| 5 | 162.259 | 0.906 | 94.176 | 0.894 | 1.196 |
| 5.1 | 163.892 | 0.915 | 94.705 | 0.899 | 1.201 |
| 5.2 | 166.012 | 0.927 | 94.667 | 0.899 | 1.217 |
| 5.3 | 167.366 | 0.935 | 95.310 | 0.905 | 1.219 |
| 5.4 | 168.500 | 0.941 | 95.429 | 0.906 | 1.226 |
| 5.5 | 169.200 | 0.945 | 96.224 | 0.914 | 1.221 |
| 5.6 | 169.313 | 0.946 | 97.091 | 0.922 | 1.211 |

(continued)

| Battery Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 5.7 | 170.168 | 0.950 | 97.543 | 0.926 | 1.211 |
| 5.8 | 170.263 | 0.951 | 98.205 | 0.932 | 1.204 |
| 5.9 | 171.009 | 0.955 | 98.643 | 0.937 | 1.203 |
| 6 | 171.389 | 0.957 | 99.886 | 0.948 | 1.191 |
| 6.1 | 172.243 | 0.962 | 100.271 | 0.952 | 1.192 |
| 6.2 | 172.600 | 0.964 | 101.229 | 0.961 | 1.184 |
| 6.3 | 173.179 | 0.967 | 101.471 | 0.963 | 1.185 |

[Table 3]

| Battery Comparative Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 0.1 | 16.650 | 0.093 | 0.000 | 0.000 | 0.000 |
| 0.2 | 19.016 | 0.106 | 0.000 | 0.000 | 0.000 |
| 0.3 | 22.295 | 0.125 | 0.000 | 0.000 | 0.000 |
| 0.4 | 29.821 | 0.167 | 0.000 | 0.000 | 0.000 |
| 0.5 | 36.663 | 0.205 | 0.000 | 0.000 | 0.000 |
| 0.6 | 43.292 | 0.242 | 0.000 | 0.000 | 0.000 |
| 0.7 | 47.953 | 0.268 | 0.000 | 0.000 | 0.000 |
| 0.8 | 53.099 | 0.297 | 0.000 | 0.000 | 0.000 |
| 0.9 | 56.478 | 0.316 | 0.000 | 0.000 | 0.000 |
| 1 | 59.343 | 0.332 | 0.000 | 0.000 | 0.000 |
| 1.1 | 61.324 | 0.343 | 0.000 | 0.000 | 0.000 |
| 1.2 | 64.204 | 0.359 | 0.000 | 0.000 | 0.000 |
| 1.3 | 66.670 | 0.373 | 0.000 | 0.000 | 0.000 |
| 1.4 | 70.348 | 0.394 | 0.000 | 0.000 | 0.000 |
| 1.5 | 72.614 | 0.407 | 0.000 | 0.000 | 0.000 |
| 1.6 | 76.092 | 0.426 | 0.000 | 0.000 | 0.000 |
| 1.7 | 78.359 | 0.439 | 0.000 | 0.000 | 0.000 |
| 1.8 | 81.637 | 0.457 | 0.000 | 0.000 | 0.000 |
| 1.9 | 84.218 | 0.472 | 0.000 | 0.000 | 0.000 |
| 2 | 87.083 | 0.488 | 0.000 | 0.000 | 0.000 |
| 2.1 | 89.563 | 0.501 | 0.000 | 0.000 | 0.000 |
| 2.2 | 92.043 | 0.515 | 0.000 | 0.000 | 0.000 |
| 2.3 | 94.125 | 0.527 | 0.000 | 0.000 | 0.000 |
| 2.4 | 96.291 | 0.539 | 0.000 | 0.000 | 0.000 |
| 2.5 | 98.672 | 0.552 | 35.214 | 0.334 | 1.950 |

(continued)

| Battery Comparative Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 2.6 | 100.354 | 0.562 | 43.848 | 0.416 | 1.593 |
| 2.7 | 102.335 | 0.573 | 44.672 | 0.424 | 1.594 |
| 2.8 | 103.134 | 0.577 | 48.014 | 0.456 | 1.495 |
| 2.9 | 104.317 | 0.584 | 51.324 | 0.487 | 1.414 |
| 3 | 104.516 | 0.585 | 55.952 | 0.531 | 1.300 |
| 3.1 | 105.614 | 0.591 | 61.614 | 0.585 | 1.193 |
| 3.2 | 105.913 | 0.593 | 65.038 | 0.617 | 1.133 |
| 3.3 | 107.296 | 0.601 | 70.381 | 0.668 | 1.061 |
| 3.4 | 108.579 | 0.608 | 73.486 | 0.698 | 1.028 |
| 3.5 | 110.062 | 0.616 | 76.224 | 0.724 | 1.005 |
| 3.6 | 111.359 | 0.623 | 78.686 | 0.747 | 0.985 |
| 3.7 | 113.440 | 0.635 | 79.752 | 0.757 | 0.990 |
| 3.8 | 114.523 | 0.641 | 80.891 | 0.768 | 0.985 |
| 3.9 | 116.704 | 0.653 | 80.981 | 0.769 | 1.003 |
| 4 | 118.087 | 0.661 | 81.852 | 0.777 | 1.004 |
| 4.1 | 119.883 | 0.671 | 83.224 | 0.790 | 1.002 |
| 4.2 | 121.166 | 0.678 | 84.300 | 0.800 | 1.000 |
| 4.3 | 123.048 | 0.689 | 86.367 | 0.820 | 0.991 |
| 4.4 | 124.430 | 0.697 | 87.781 | 0.833 | 0.986 |
| 4.5 | 126.013 | 0.705 | 87.995 | 0.835 | 0.996 |
| 4.6 | 127.210 | 0.712 | 87.857 | 0.834 | 1.008 |
| 4.7 | 128.493 | 0.719 | 88.976 | 0.845 | 1.005 |
| 4.8 | 129.591 | 0.726 | 90.700 | 0.861 | 0.994 |
| 4.9 | 130.574 | 0.731 | 92.610 | 0.879 | 0.981 |
| 5 | 132.157 | 0.740 | 94.176 | 0.894 | 0.976 |
| 5.1 | 133.254 | 0.746 | 94.705 | 0.899 | 0.979 |
| 5.2 | 134.537 | 0.753 | 94.667 | 0.899 | 0.989 |
| 5.3 | 135.820 | 0.760 | 95.310 | 0.905 | 0.992 |
| 5.4 | 138.001 | 0.773 | 95.429 | 0.906 | 1.006 |
| 5.5 | 139.198 | 0.779 | 96.224 | 0.914 | 1.007 |
| 5.6 | 140.880 | 0.789 | 97.091 | 0.922 | 1.010 |
| 5.7 | 141.479 | 0.792 | 97.543 | 0.926 | 1.009 |
| 5.8 | 142.463 | 0.798 | 98.205 | 0.932 | 1.009 |
| 5.9 | 142.363 | 0.797 | 98.643 | 0.937 | 1.004 |
| 6 | 143.161 | 0.802 | 99.886 | 0.948 | 0.997 |
| 6.1 | 143.361 | 0.803 | 100.271 | 0.952 | 0.995 |
| 6.2 | 144.644 | 0.810 | 101.229 | 0.961 | 0.994 |

(continued)

| Battery Comparative Example 2-A | | | | | |
|---|---|---|---|---|---|
| Distance from boundary between uncoated portion and coated portion toward inside of electrode (mm) | Negative Electrode | | Positive Electrode | | N/P ratio at each point |
| | a | b | a | b | |
| 6.3 | 145.542 | 0.815 | 101.471 | 0.963 | 0.998 |

**[Measurement of Thickness]**

The average thickness and the thickness of the electrode according to each of Examples and Comparative Examples were measured by using a non-contact type thickness gauge with a confocal sensor (AZO sensors Co.). The thickness data were obtained by measuring the thickness at each point once with an interval of at least 0.1 mm from the uncoated portion (non-coated portion) toward the inside of the electrode (longitudinal direction) by way of the stair portion. The thickness gauge measured the thickness also in the width direction for one point in the longitudinal direction, while being moved by a device (sub-motor) capable of transverse movement. Meanwhile, the average thickness of the flat portion was taken as the average value of the thickness values measured at optional 10 points in the flat portion region.

[Description of Drawing Numerals]

| | | | |
|---|---|---|---|
| 20: | Electrode active material layer | 21: | Flat portion |
| 22: | Sloped portion      10: | Current collector | |
| DF: | Flat portion of lower sublayer | UF: | Flat portion of upper sublayer |
| 20d: | Lower sublayer      20u: | Upper sublayer | |
| US: | Sloped portion of upper sublayer | DS: | Sloped portion of lower sublayer |
| UE: | Terminal end of upper sublayer | Dt: | Transition portion of lower sublayer |
| Ut: | Transition portion of upper sublayer | UC: | Uncoated portion |
| 30: | Stair portion | | |
| s: | Specific region from boundary between uncoated portion and coated portion | | |
| CB: | Boundary between coated portion and non-coated portion of electrode active material layer | | |
| W1: | Total distance from terminal end (UE) to transition portion (Ut) | | |
| W2: | Part corresponding to 60-90% (75±15%) of length from terminal end (UE) toward transition portion (Ut) in distance (W1) to terminal end (UE) of sloped portion of upper sublayer from transition portion (Ut) | | |
| 300: | Slot die      400: | Drying unit      500: | Cutter |
| 100: | Electrode      A: | Stair shape      P100: | Coated slurry (electrode before drying) |
| 600: | Conveying roller      C: | Coated portion      UC: | Uncoated portion |
| 1000: | Electrode assembly      1100: | Positive electrode      1200: | Negative electrode |
| SP: | Separator | | |

**Claims**

1.   An electrode for an electrochemical device, which comprises:

a current collector (10); and
an electrode active material layer (20) formed on at least one surface of the current collector (10),
the electrode active material layer (20) comprises a lower sublayer (20d) formed on the surface of the current collector (10) and an upper sublayer (20u) disposed on the top surface of the lower sublayer (20d),
each sublayer has a sloped portion (22, US, DS) with a decreased thickness at the end of its outer circumference, and thus the sloped portion of the lower sublayer (DS) does not coincide with the sloped portion of the upper sublayer (US) at the end of the outer circumference of the electrode active material layer (20), thereby forming a stair portion (30), and

difference (D-d) between the electrode thickness (d) at a portion (W2) corresponding to 75±15% of the distance from the terminal end (UE) toward the transition portion (Ut) and the electrode thickness (D) at the flat portion (UF) of the upper sublayer, at the shortest distance (W1) from the transition portion (Ut) of the upper sublayer to the terminal end (UE) of the sloped portion, is less than 12% based on 100% of the thickness (D) of the flat portion (UF), and the transition portion (Ut) is a boundary between the flat portion (UF) and the sloped portion (US) and means a point where the flat portion (21) ends and the sloped portion (22) begins,

wherein the region within 10 mm from the boundary (transition portion) between the sloped portion (US) and the flat portion (UF) of the upper sublayer toward the flat portion (21) has a thickness corresponding to ±1.5% based on the average thickness of the remaining flat portion (21) except the region.

2. The electrode for an electrochemical device according to claim 1, wherein the current collector (10) is provided with an uncoated portion (UC) which is not coated with the electrode active material layer (20), at the end of the outer circumference thereof, and the stair portion (30) is disposed within 5 mm from the boundary between the uncoated portion (UC) and the coated portion (C) which is coated with the electrode active material layer (20).

3. The electrode for an electrochemical device according to claim 2, wherein the lower sublayer (20d) of the electrode active material layer (20) has a thickness of 100-160 $\mu$m.

4. The electrode for an electrochemical device according to claim 1, wherein the difference (D-d) between the electrode thickness (d) at any position (R) in the portion (W2) corresponding to 75±15% of the distance from a terminal end (UE) and the electrode thickness (D) at the flat portion (UF) of the upper sublayer is less than 15 $\mu$m.

5. The electrode for an electrochemical device according to claim 1, which is a negative electrode.

6. An electrochemical device comprising the electrode as defined in any one of claims 1 to 5.

7. A method for manufacturing the electrode (100) for an electrochemical device as defined in claim 1, comprising the steps of:

(S1) preparing an electrode slurry for a lower sublayer (20d) comprising a first electrode active material (20), a first binder and a first conductive material, and an electrode slurry for an upper sublayer (20u) comprising a second electrode active material, a second binder and a second conductive material; and

(S2) applying the electrode slurry for a lower sublayer (20d) and the electrode slurry for an upper sublayer (20u) prepared in step (S1), simultaneously or sequentially, to at least one surface of an electrode current collector (10) and drying them at the same time to form a lower sublayer (20d) disposed on at least one surface of the electrode current collector (10) and an upper sublayer (20u) disposed on the top surface of the lower sublayer (20d).

8. The method for manufacturing the electrode for an electrochemical device according to claim 7, wherein the stair portion (30) is formed due to the discordance of the sloped portion (22) of the lower sublayer (20d) with the sloped portion of the upper sublayer (US) at the end of the outer circumference of the electrode active material layer (20) by controlling the coating gap and coating width of a slot die (300), when coating the slurry for a lower sublayer (20d) and the slurry for an upper sublayer (20u).

9. The electrochemical device according to claim 6, which comprises an electrode assembly (1000) comprising a positive electrode (1100), a negative electrode (1200) and a separator (SP) interposed between the positive electrode (1100) and the negative electrode (1200), wherein the electrode assembly (1000) has an NP ratio of 1.00-1.30.

10. The electrochemical device according to claim 9, wherein the end portion of the positive electrode (1100) is disposed in the electrode assembly (1000) to be shorter than the end portion of the negative electrode (1200).

11. The electrochemical device according to claim 9 or 10, wherein the electrode assembly (1000) has an NP ratio of 1.00 or more throughout the whole negative electrode (1200) and positive electrode (1100) facing each other.

**Patentansprüche**

1. Elektrode für eine elektrochemische Vorrichtung, welche umfasst:

   einen Stromkollektor (10); und
   eine Elektrodenaktivmaterialschicht (20), welche auf wenigstens einer Fläche des Stromkollektors (10) gebildet ist,
   wobei die Elektrodenaktivmaterialschicht (20) eine untere Unterschicht (20d), welche auf der Fläche des Stromkollektors (10) gebildet ist, und eine obere Unterschicht (20u) umfasst, welche auf der oberen Fläche der unteren Unterschicht (20d) angeordnet ist,
   wobei jede Unterschicht einen geneigten Abschnitt (22, US, DS) mit einer verringerten Dicke an dem Ende seines äußeren Umfangs aufweist und wobei somit der geneigte Abschnitt der unteren Unterschicht (DS) nicht mit dem geneigten Abschnitt der oberen Unterschicht (US) an dem Ende des äußeren Umfangs der Elektrodenaktivmaterialschicht (20) übereinstimmt, wodurch ein Stufenabschnitt (30) gebildet wird, und
   wobei eine Differenz (D-d) zwischen der Elektrodendicke (d) an einem Abschnitt (W2), welcher 75 ± 15 % des Abstands von dem abschließenden Ende (UE) in Richtung des Übergangsabschnitts (Ut) entspricht, und der Elektrodendicke (D) an dem flachen Abschnitt (UF) der oberen Unterschicht, an dem kürzesten Abstand (W1) von dem Übergangsabschnitt (Ut) der oberen Unterschicht zu dem abschließenden Ende (UE) des geneigten Abschnitts, auf Grundlage von 100 % der Dicke (D) des flachen Abschnitts (UF) weniger als 12 % beträgt und der Übergangsabschnitt (Ut) eine Grenze zwischen dem flachen Abschnitt (UF) und dem geneigten Abschnitt (US) ist und einen Punkt darstellt, an welchem der flache Abschnitt (21) endet und der geneigte Abschnitt (22) beginnt, wobei der Bereich innerhalb 10 mm von der Grenze (Übergangsabschnitt) zwischen dem geneigten Abschnitt (US) und dem flachen Abschnitt (UF) der oberen Unterschicht in Richtung des flachen Abschnitts (21) eine Dicke aufweist, welche auf Grundlage der durchschnittlichen Dicke des verbleibenden flachen Abschnitts (21) mit Ausnahme des Bereichs ± 1,5 % entspricht.

2. Elektrode für eine elektrochemische Vorrichtung nach Anspruch 1, wobei der Stromkollektor (10) an dem Ende des äußeren Umfangs davon mit einem unbeschichteten Abschnitt (UC) bereitgestellt ist, welcher nicht mit der Elektrodenaktivmaterialschicht (20) beschichtet ist, und der Stufenabschnitt (30) innerhalb 5 mm von der Grenze zwischen dem unbeschichteten Abschnitt (UC) und dem beschichteten Abschnitt (C) angeordnet ist, welcher mit der Elektrodenaktivmaterialschicht (20) beschichtet ist.

3. Elektrode für eine elektrochemische Vorrichtung nach Anspruch 2, wobei die untere Unterschicht (20d) der Elektrodenaktivmaterialschicht (20) eine Dicke von 100 - 160 $\mu$m aufweist.

4. Elektrode für eine elektrochemische Vorrichtung nach Anspruch 1, wobei die Differenz (D-d) zwischen der Elektrodendicke (d) an jeglicher Position (R) in dem Abschnitt (W2), welcher 75 ± 15 % des Abstands von einem abschließenden Ende (UE) entspricht, und der Elektrodendicke (D) an dem flachen Abschnitt (UF) der oberen Unterschicht weniger als 15 $\mu$m beträgt.

5. Elektrode für eine elektrochemische Vorrichtung nach Anspruch 1, welche eine negative Elektrode ist.

6. Elektrochemische Vorrichtung, umfassend die wie in einem der Ansprüche 1 bis 5 definierte Elektrode.

7. Verfahren zur Herstellung der wie in Anspruch 1 definierten Elektrode (100) für eine elektrochemische Vorrichtung, umfassend die folgenden Schritte:

   (S1) Vorbereiten einer Elektrodenaufschlämmung für eine untere Unterschicht (20d), welche ein erstes Elektrodenaktivmaterial (20), ein erstes Bindemittel und ein erstes leitfähiges Material umfasst, und einer Elektrodenaufschlämmung für eine obere Unterschicht (20u), welche ein zweites Elektrodenaktivmaterial, ein zweites Bindemittel und ein zweites leitfähiges Material umfasst; und
   (S2) Aufbringen der Elektrodenaufschlämmung für eine untere Unterschicht (20d) und der Elektrodenaufschlämmung für eine obere Unterschicht (20u), welche in Schritt (S1) vorbereitet worden sind, gleichzeitig oder nacheinander, auf wenigstens eine Fläche eines Elektrodenstromkollektors (10) und Trocknen derselben zu der gleichen Zeit, um eine untere Unterschicht (20d), welche auf wenigstens einer Fläche des Elektrodenstromkollektors (10) angeordnet ist, und eine obere Unterschicht (20u) zu bilden, welche auf der oberen Fläche der unteren Unterschicht (20d) angeordnet ist.

**8.** Verfahren zur Herstellung der Elektrode für eine elektrochemische Vorrichtung nach Anspruch 7, wobei der Stufenabschnitt (30) aufgrund der Nichtübereinstimmung des geneigten Abschnitts (22) der unteren Unterschicht (20d) mit dem geneigten Abschnitt der oberen Unterschicht (US) an dem Ende des äußeren Umfangs der Elektrodenaktivmaterialschicht (20) durch ein Steuern des Beschichtungsspalts und der Beschichtungsbreite einer Schlitzdüse (300) bei einem Beschichten der Aufschlämmung für eine untere Unterschicht (20d) und der Aufschlämmung für eine obere Unterschicht (20u) gebildet wird.

**9.** Elektrochemische Vorrichtung nach Anspruch 6, welche eine Elektrodenanordnung (1000) umfasst, die eine positive Elektrode (1100), eine negative Elektrode (1200) und einen Separator (SP) umfasst, welcher zwischen der positiven Elektrode (1100) und der negativen Elektrode (1200) eingefügt ist, wobei die Elektrodenanordnung (1000) ein NP-Verhältnis von 1,00 - 1,30 aufweist.

**10.** Elektrochemische Vorrichtung nach Anspruch 9, wobei der Endabschnitt der positiven Elektrode (1100) derart in der Elektrodenanordnung (1000) angeordnet ist, dass er kürzer ist als der Endabschnitt der negativen Elektrode (1200).

**11.** Elektrochemische Vorrichtung nach Anspruch 9 oder 10, wobei die Elektrodenanordnung (1000) über die gesamte negative Elektrode (1200) und die gesamte positive Elektrode (1100) hinweg, welche einander zugewandt sind, ein NP-Verhältnis von 1,00 oder mehr aufweist.

**Revendications**

**1.** Électrode pour un dispositif électrochimique, qui comprend :

un collecteur de courant (10) ; et
une couche de matériau actif d'électrode (20) formée sur au moins une surface du collecteur de courant (10), la couche de matériau actif d'électrode (20) comprend une sous-couche inférieure (20d) formée sur la surface du collecteur de courant (10) et une sous-couche supérieure (20u) disposée sur la surface du dessus de la sous-couche inférieure (20d),
chaque sous-couche a une partie inclinée (22, US, DS) d'épaisseur réduite à l'extrémité de sa circonférence extérieure, et par conséquent la partie inclinée de la sous-couche inférieure (DS) ne coïncide pas avec la partie inclinée de la sous-couche supérieure (US) à l'extrémité de la circonférence extérieure de la couche de matériau actif d'électrode (20), formant ainsi une partie marche (30), et
la différence (D - d) entre l'épaisseur (d) d'électrode au niveau d'une partie (W2) correspondant à 75+15 % de la distance depuis l'extrémité terminale (UE) vers la partie de transition (Ut) et l'épaisseur (D) d'électrode au niveau de la partie plate (UF) de la sous-couche supérieure, à la distance la plus courte (W1) depuis la partie de transition (Ut) de la sous-couche supérieure jusqu'à l'extrémité terminale (UE) de la partie inclinée, est inférieure à 12 % sur la base de 100 % de l'épaisseur (D) de la partie plate (UF), et la partie de transition (Ut) est une limite entre la partie plate (UF) et la partie inclinée (US) et désigne un point où la partie plate (21) se termine et la partie inclinée (22) commence,
dans laquelle la région dans les 10 mm depuis la limite (partie de transition) entre la partie inclinée (US) et la partie plate (UF) de la sous-couche supérieure vers la partie plate (21) a une épaisseur correspondant à $\pm$ 1,5 % sur la base de l'épaisseur moyenne de la partie plate (21) restante, à l'exception de la région.

**2.** Électrode pour un dispositif électrochimique selon la revendication 1, dans laquelle le collecteur de courant (10) est pourvu d'une partie non revêtue (UC) qui n'est pas revêtue de la couche de matériau actif d'électrode (20), à l'extrémité de la circonférence extérieure de celle-ci, et la partie marche (30) est disposée dans les 5 mm depuis la limite entre la partie non revêtue (UC) et la partie revêtue (C) qui est revêtue de la couche de matériau actif d'électrode (20).

**3.** Électrode pour un dispositif électrochimique selon la revendication 2, dans laquelle la sous-couche inférieure (20d) de la couche de matériau actif d'électrode (20) a une épaisseur de 100 à 160 $\mu$m.

**4.** Électrode pour un dispositif électrochimique selon la revendication 1, dans laquelle la différence (D - d) entre l'épaisseur (d) d'électrode à n'importe quelle position (R) dans la partie (W2) correspondant à 75 $\pm$ 15 % de la distance depuis une extrémité terminale (UE) et l'épaisseur (D) d'électrode au niveau de la partie plate (UF) de la sous-couche supérieure est inférieure à 15 $\mu$m.

**EP 4 273 952 B1**

**5.** Électrode pour un dispositif électrochimique selon la revendication 1, qui est une électrode négative.

**6.** Dispositif électrochimique comprenant l'électrode telle que définie dans l'une quelconque des revendications 1 à 5.

**7.** Procédé pour fabriquer l'électrode (100) pour un dispositif électrochimique telle que définie dans la revendication 1, comprenant les étapes suivantes :

(S1) préparer une suspension d'électrode pour une sous-couche inférieure (20d) comprenant un premier matériau actif d'électrode (20), un premier liant et un premier matériau conducteur, et une suspension d'électrode pour une sous-couche supérieure (20u) comprenant un second matériau actif d'électrode, un second liant et un second matériau conducteur ; et
(S2) appliquer la suspension d'électrode pour une sous-couche inférieure (20d) et la suspension d'électrode pour une sous-couche supérieure (20u) préparées à l'étape (S1), simultanément ou de manière séquentielle, sur au moins une surface d'un collecteur de courant (10) d'électrode et les sécher en même temps pour former une sous-couche inférieure (20d) disposée sur au moins une surface du collecteur de courant (10) d'électrode et une sous-couche supérieure (20u) disposée sur la surface du dessus de la sous-couche inférieure (20d).

**8.** Procédé pour fabriquer l'électrode pour un dispositif électrochimique selon la revendication 7, dans lequel la partie marche (30) est formée en raison de la discordance de la partie inclinée (22) de la sous-couche inférieure (20d) avec la partie inclinée de la sous-couche supérieure (US) à l'extrémité de la circonférence extérieure de la couche de matériau actif d'électrode (20) en régulant l'espace de revêtement et la largeur de revêtement d'une filière plate (300), lors du revêtement avec la suspension pour une sous-couche inférieure (20d) et la suspension pour une sous-couche supérieure (20u).

**9.** Dispositif électrochimique selon la revendication 6, qui comprend un ensemble d'électrodes (1000) comprenant une électrode positive (1100), une électrode négative (1200) et un séparateur (SP) interposé entre l'électrode positive (1100) et l'électrode négative (1200), dans lequel l'ensemble d'électrodes (1000) a un rapport NP de 1,00 à 1,30.

**10.** Dispositif électrochimique selon la revendication 9, dans lequel la partie d'extrémité de l'électrode positive (1100) est disposée dans l'ensemble d'électrodes (1000) pour être plus courte que la partie d'extrémité de l'électrode négative (1200).

**11.** Dispositif électrochimique selon la revendication 9 ou 10, dans lequel l'ensemble d'électrodes (1000) a un rapport NP de 1,00 ou plus sur la totalité de l'électrode négative (1200) et de l'électrode positive (1100) se faisant face l'une l'autre.

FIG. 1

21    20
                    22

                              10

FIG. 2

21        20        22
DF  UF  20d  20u  US  DS

                        10    UC

UE    Dt

FIG. 3

20
20d  20u
                30

                    CB 10

s

FIG. 4

FIG. 5

FIG. 6

FIG. 7

10

C    UC

FIG. 8

10

C    UC

FIG. 9

FIG. 10

FIG. 11

FIG. 12

FIG. 13

**EP 4 273 952 B1**

**Patent documents cited in the description**

- KR 1020210080424
- US 2016294015 A1